# EUROPEAN PATENT SPECIFICATION

(11) **EP 3 986 017 B1**
(45) Date of publication and mention of the grant of the patent: **15.01.2025**
(21) Application number: 20833173.6
(22) Date of filing: 24.04.2020
(51) Int. Cl.: H04W 24/02, H04W 24/04, H04W 24/08, H04W 24/10, H04W 36/00, H04W 76/19, H04W 4/70

(54) **METHOD AND DEVICE FOR IDENTIFYING TERMINAL EXPERIENCING ANOMALY, STORAGE MEDIUM, AND ELECTRONIC DEVICE**
VERFAHREN UND VORRICHTUNG ZUR IDENTIFIZIERUNG EINES ENDGERÄTES MIT EINER ANOMALIE, SPEICHERMEDIUM UND ELEKTRONISCHES GERÄT
PROCÉDÉ ET DISPOSITIF D'IDENTIFICATION DE TERMINAL SUBISSANT UNE ANOMALIE, SUPPORT DE STOCKAGE, ET DISPOSITIF ÉLECTRONIQUE

(30) Priority: 24.06.2019 CN 201910548034
(43) Date of publication of application: 20.04.2022
(73) Proprietor: ZTE Corporation, Shenzhen Guangdong 518057 (CN)
(72) Inventor: FAN, Xuefeng, Shenzhen, Guangdong 518057 (CN); CHEN, Xiao, Shenzhen, Guangdong 518057 (CN); WANG, Hongjian, Shenzhen, Guangdong 518057 (CN)
(74) Representative: Savi, Massimiliano
(86) International application number: PCT/CN2020/086701
(87) International publication number: WO 2020/259045

(56) References cited:
- EP-A1- 2 661 119
- EP-A1- 2 836 910
- WO-A1-2017/123405
- CN-A- 101 877 872
- CN-A- 104 427 549
- CN-A- 107 404 728
- US-A1- 2019 104 425
- CCJJHH: "Using RRC Reconstruction Scale to Locate Abnormal Terminals", 6 February 2016 (2016-02-06), CN, XP009533000, Retrieved from the Internet <URL:http://club.mscbsc.com/t634842p1.html >

## Description

### TECHNICAL FIELD

The present disclosure relates to a Long Term Evolution (LTE) network system which enables and supports Enhancement Machine Type Communication (eMTC for short), and in particular to a method for identifying an abnormal terminal.

### BACKGROUND

With the constant development of the information age, the interconnection of everything is an inevitable trend. In the future, the Internet of Things connection will be widely applied in various aspect of daily life, such as pet tracking, care for the elderly, intelligent travel and vertical industries (such as industrial manufacturing and intelligent logistics). As an important branch of the technology for interconnection of everything, eMTC is an evolving Internet of Things technique based on the LTE protocol. In the future, eMTC will evolve along with the LTE protocol according to the development of technology, application scenarios, etc.

When deployed in the same cell, eMTC and LTE share the same spectrum resource. Generally, the eMTC function can be enabled in LTE cells of a current network by upgrading base station software, so that the corresponding cells can provide services for both eMTC terminals and LTE terminals.

Since some bits of an original reserved field are enabled as an eMTC-specific field and some early produced LTE terminals did not take the extension of the 3GPP R13 protocol into consideration, the conditions of check and judgment are unreasonable. As a result, such LTE terminals cannot normally decode a master information block (MIB), and therefore cannot access a LTE cell enabling and supporting eMTC.

If such LTE terminals have accessed a LTE cell without supporting eMTC, when a process of handover to a LTE cell supporting eMTC as a target cell occurs, it is inevitable that the LTE terminals cannot be normally handed over to the LTE cell supporting eMTC, that is, the network cell in which such LTE terminals can reside is actually smaller than a planned network.

Since such LTE terminals have been sold in a large number before a network enables and supports eMTC, after some cells or frequency bands in the network enable and support an eMTC, in terms of terminals the number of cells to which users of such LTE terminals can access will be significantly reduced, and as a result, user experience will be compromised. In terms of network side the network performance indicators, such as handover and reestablishment, will be significantly changed, and more seriously, it may cause a large number of user complaints and even affect the progress of eMTC deployment.

EP2661119A1 discloses a detection of faulty wireless terminals in a wireless communication network, and an occurrence of one or more service incidents occurring for a wireless terminal during an observation time period is detected.

US2019104425A1 discloses a method and an apparatus for managing a PDN connection by inducing, by a node, a terminal to autonomously recover a failure situation or detecting the corresponding terminal when the terminal is not capable of generating or maintaining the PDN connection in a wireless communication system.

WO2017123405A1 discloses a design of channel raster for narrowband operation, performed by a base station, generally includes determining, based on one or more conditions, an exact frequency location of one or more channels to perform narrowband communications with a user equipment; transmitting an indication of the one or more conditions to the user equipment; and communicating with the UE, based at least in part on the exact frequency location of the one channel.

### SUMMARY

The invention is defined in the appended claims.

According to some embodiments of the present disclosure, a method, device, a storage medium and an electronic device for identifying an abnormal terminal are provided in order to solve at least to a certain extent the problem on how to identify a LTE terminal experiencing abnormal access under a LTE network enabling and supporting eMTC.

According to some embodiments of the present disclosure, a method for identifying an abnormal terminal is provided, including: determining a cell having an abnormal indicator; identifying an IMSI number of a terminal experiencing abnormal access according to signalings of the cell having an abnormal indicator; and determining the terminal experiencing abnormal access through IMSI number signaling verification, wherein determining the terminal experiencing abnormal access through IMSI number signaling verification comprises: monitoring the IMSI number signaling within a first preset period of time according to the IMSI number of the terminal; in response to a target cell to which the terminal is handed over being a LTE cell enabling eMTC, and the terminal reestablishing connection back to a source cell after handover and the source cell being a LTE cell without enabling eMTC, then determining that the terminal belongs to a terminal experiencing abnormal access.

According to some embodiments of the present disclosure, a storage medium storing a computer program is also provided, the computer program is configured to carry out the aforementioned method when being executed.

According to some embodiments of the present disclosure, an electronic device is also provided, including a memory and a processor, where the storage medium stores a computer program which, when executed by a processor, causes the processor to carry out the aforementioned method.

### BRIEF DESCRIPTION OF DRAWINGS

FIG. 1 is a flowchart of a method for identifying an abnormal terminal according to an embodiment of the present disclosure;
FIG. 2 is a structural block diagram of a device for identifying an abnormal terminal according to an embodiment of the present disclosure; and
FIG. 3 is a structural block diagram of an electronic device according to an embodiment of the present disclosure.

The implementation, functional characteristics and advantages of the embodiments of the present disclosure will be further illustrated with reference to the accompanying drawings.

### DETAILED DESCRIPTION

The present disclosure will be illustrated in detail hereinafter with reference to the drawings and embodiments.

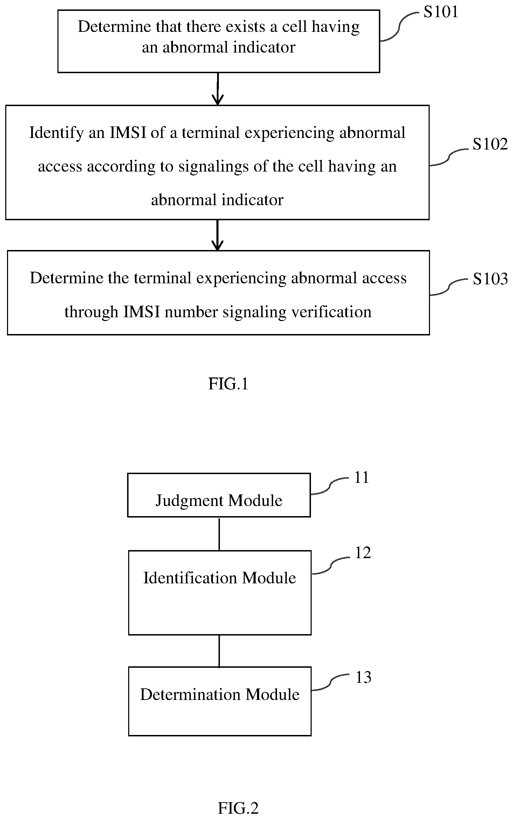

According to some embodiments of the present disclosure, a method for identifying an abnormal terminal is disclosed. As shown in FIG. 1, the method includes the following steps S101 to S103.

In a step of S 101, it is determined that there exists a cell having an abnormal indicator.

In a step of S 102, an IMSI number of a terminal experiencing abnormal access is identified according to signalings of the cell having an abnormal indicator.

In a step of S103, the terminal experiencing abnormal access is determined through IMSI number signaling verification.

According to some embodiments of the present disclosure, a device for identifying an abnormal terminal is also provided. As shown in FIG. 2, the device includes:
a judgment module 11, configured to determine a cell having an abnormal indicator;
an identification module 12, configured to identify an IMSI number of a terminal experiencing abnormal access according to signalings of the cell having an abnormal indicator; and
a determination module 13, configured to determine the terminal experiencing abnormal access through IMSI number signaling verification.

The method for identifying an abnormal terminal according to the embodiment of the present disclosure also includes the following steps.

The abnormality of cell-level handover and reestablishment indicators which are introduced by a terminal experiencing abnormal access is identified, and the related indicators of the number of handovers and the number of reestablishments of the cell before enabling an eMTC are recorded; after the eMTC function is enabled and supported by the cell, if a change ratio of the related indicators compared to the aforementioned recorded indicators exceeds a preset threshold, then the cell having an abnormal indicator is determined, the threshold may be set as 5%, and the threshold belongs to a network KPI (key performance indicator), which is generally less fluctuated with the change of a traffic model and is adjustable.

Signalings of the determined cell having an abnormal indicator are acquired, the terminal causing the abnormality is analyzed, and an IMSI number of the terminal experiencing abnormal access is identified according to the signalings of the cell having an abnormal indicator. By screening out a signaling with reestablishment recurred among the signaling of the cell, from the signaling an identity (ID) of a terminal whose number of reestablishments within a certain preset period of time exceeds a preset threshold is identified, the threshold is adjustable. For example, the number of reestablishments within 15 minutes exceeds hundreds of times, but this example does not constitute a specific limitation. The international mobile subscriber identification (IMSI) number of the corresponding terminal is then acquired according to the identified terminal ID and access signaling.

According to the acquired terminal IMSI number, by respectively monitoring the IMSI number signaling for a preset period of time (e.g., 1 hour) which is adjustable, judging respectively whether all signalings following the reestablishment of Radio Resource Control (RRC) connections after the reconfiguration of all the RRC connections in each IMSI number signaling meet the following conditions: a target cell to which the terminal is handed over is a LTE cell enabling eMTC; the terminal reestablishes connection back to a source cell immediately after handover and the source cell is a LTE cell without enabling eMTC; then it is determined that the IMSI number belongs to the terminal experiencing abnormal access, or else it is determined that the IMSI number does not belong to the terminal experiencing abnormal access.

According to the IMSI number of the determined abnormal terminal, inquiring a corresponding number and model of the terminal from a core network, informing the user according to a solution corresponding to various abnormal terminal models, and monitoring whether the IMSI number signalings return to normality. The corresponding solution includes updating the terminal version, and if there is no updated terminal version, the operator can inform the user to replace the old terminal with a new one with some discount.

The above steps can be repeated at certain time intervals to continuously perform screening, judgment and accurate identification of abnormal terminals significantly affecting network indicators and inform the user of a specific solution.

### Embodiment one

Handover and reestablishment indicators of a certain LTE cell are judged, and if the number of handovers and the number of reestablishments of the cell after enabling the eMTC function is increased by over 10% in comparison with the number of handovers and the number of reestablishments of the cell before enabling the eMTC function, then it is determined that the LTE cell belongs to a cell having an abnormal indicator.

According to the analysis of abnormal signalings in the corresponding cell, an abnormal terminal ID at which signalings with reestablishment recurred over 500 times within 30 minutes that is most concentrated is screened out, and a corresponding IMSI number is identified as No.X1 according to the access signaling.

According to the identified IMSI number (No.X1), monitoring the IMSI number signalings for 2 hours, and judging the situation of the signalings following the reestablishment of RRC connections after the reconfiguration (handover command) of all the RRC connections in the IMSI number signalings , then determining whether all the signalings following the reestablishment of the RRC connections after the reconfiguration (handover command) of all the RRC connections meet the following conditions: a target cell to which the terminal is handed over is a LTE cell enabling eMTC, and the terminal reestablishes connection back to a source cell immediately after handover and the source cell is a LTE cell without enabling eMTC; if yes, then it is determined that the terminal with the IMSI number (No.X1) is a terminal experiencing abnormal access.

A corresponding number and model of the terminal are inquired according to the identified IMSI number (No.X1), the user is informed of a solution for the corresponding model of the terminal through a short message, a phone call or the like and monitoring is performed until the user updates terminal version, and if there is no updated terminal version as the solution, the operator can inform the user to replace the old terminal with a new one with some discount.

According to some embodiments of the present disclosure, a storage medium storing a computer program is also provided, the computer program is configured to carry out the aforementioned method when being executed.

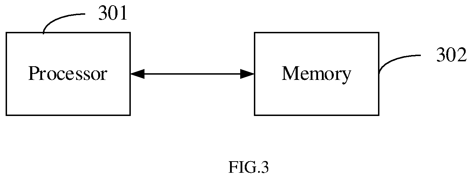

According to some embodiments of the present disclosure, an electronic device is also provided, including a processor 301 and a memory 302 as shown in FIG. 3, where the memory 302 stores a computer program which, when executed by the processor 301, causes the processor 301 to carry out the aforementioned method.

According to the aforementioned embodiments of the present disclosure, through the identification of signaling characteristics, the accurate determination of a terminal experiencing abnormal access and the inquiry of a corresponding number and model of the terminal in combination with a solution for the terminal experiencing abnormal access, the problem that some LTE terminals cannot normally decode a MIB and therefore cannot access a LTE cell enabling and supporting eMTC is solved.

Obviously, those having ordinary skills in the art should understand that the aforementioned steps of the present disclosure may be implemented by general-purpose computing devices. The aforementioned steps may be centralized on a single computing device or distributed across a network composed of a plurality of computing devices. In some embodiments, the aforementioned steps may be implemented by program codes executable by a computing device, and thereby the program codes may be stored in a storage device and executed by the computing device. In some cases, the steps shown or described may be executed in an order different from that herein, or the steps may be separately made into individual integrated circuit modules, or a plurality of modules or steps among them may be made into a single integrated circuit module. Thus, the present disclosure is not limited to any specific combination of hardware and software.

## Claims

1. A method executed by an electronic device
for identifying an abnormal terminal, comprising: determining a cell having an abnormal indicator (S101); identifying an international mobile subscriber identification, IMSI, number of a terminal experiencing abnormal access according to signalings of the cell having an abnormal indicator (S102); and determining the terminal experiencing abnormal access through IMSI number signaling verification (S103),
**characterized in that**, determining the terminal experiencing abnormal access through IMSI number signaling verification (S103) comprises: monitoring the IMSI number signaling within a first preset period of time according to the IMSI number of the terminal; in response to a target cell to which the terminal is handed over being a Long Term Evolution, LTE, cell enabling Enhancement Machine Type Communication, eMTC, and the terminal reestablishing connection back to a source cell after handover and the source cell being a LTE cell without enabling eMTC, then determining that the terminal belongs to a terminal experiencing abnormal access.

2. The method of claim 1, wherein the method for identifying an abnormal terminal (S101) further comprises: querying a number and model of the terminal according to the IMSI number of the abnormal terminal, and informing a user of a solution corresponding to the model.

3. The method of claim 2, wherein after informing a user of a solution corresponding to the model, the method comprises: monitoring whether the IMSI number signaling return to normality.

4. The method of claim 2 or 3, wherein the solution corresponding to the model comprises updating terminal version.

5. The method of claim 1, wherein determining a cell having an abnormal indicator (S101) comprises: as compared to the indicator of the cell before enabling eMTC, in response to a change ratio of the indicator of the cell exceeding a preset threshold, then determining that the cell is a cell having an abnormal indicator; wherein the indicator of the cell comprises the number of handovers of the cell or the number of reestablishments of the cell.

6. The method of claim 1, wherein identifying an IMSI number of a terminal experiencing abnormal access according to signalings of the cell having an abnormal indicator (S102) comprises: screening out a signaling with reestablishment recurred among the signalings of the cell, identifying from the signaling an ID of a terminal whose number of reestablishments within a second preset period of time exceeds a preset threshold, and acquiring the IMSI number of the terminal according to the terminal ID and access signaling.

7. An electronic device for identifying an abnormal terminal, comprising:
a judgment module (11), configured to determine a cell having an abnormal indicator;
an identification module (12), configured to identify an international mobile subscriber identification, IMSI, number of a terminal experiencing abnormal access according to signalings of the cell having an abnormal indicator; and
a determination module (13),
**characterized in that**, the determination module (13) is configured to monitor the IMSI number signaling within a preset period of time according to the IMSI number of the terminal; in response to a target cell to which the terminal is handed over being a Long Term Evolution, LTE, cell enabling Enhancement Machine Type Communication, eMTC, and the terminal reestablishing connection back to a source cell after handover and the source cell being a LTE cell without enabling eMTC, then determine that the terminal belongs to a terminal experiencing abnormal access.

8. A storage medium, storing a computer program which is configured to carry out the method of any of claims 1 to 6 when being executed by a processor of an electronic device.

9. An electronic device, comprising a memory (302) and a processor (301), wherein the memory (302) stores a computer program which, when executed by the processor (301), causes the processor (301) to carry out the method of any of claims 1 to 6.

## Patentansprüche

1. Verfahren, das von einem elektronischen Gerät zur Identifizierung eines anormalen Endgerätes ausgeführt wird, umfassend: Bestimmen einer Zelle mit einem anormalen Indikator (S101); Identifizieren einer internationalen Mobilteilnehmer-Identifikationsnummer (IMSI, International Mobile Subscriber Identification) eines Endgerätes, das einen anormalen Zugang erfährt, gemäß Signalisierungen der Zelle mit einem anormalen Indikator (S102); und Bestimmen des Endgerätes, das einen anormalen Zugang erfährt, durch IMSI-Nummern-Signalisierungsverifizierung (S103),
**dadurch gekennzeichnet, dass** das Bestimmen des Endgerätes, das einen anormalen Zugang erfährt, durch IMSI-Nummern-Signalisierungsverifizierung (S103) umfasst: Überwachen der IMSI-Nummern-Signalisierung innerhalb einer ersten voreingestellten Zeitspanne gemäß der IMSI-Nummer des Endgerätes; als Reaktion darauf, dass eine Zielzelle, an die das Endgerät übergeben wird, eine Long-Term-Evolution-Zelle (LTE-Zelle) ist, die Enhancement Machine Type Communication (eMTC) aktiviert,
und das Endgerät nach der Übergabe die Verbindung zurück zu einer Quellzelle wiederherstellt und die Quellzelle eine LTE-Zelle ohne Aktivierung von eMTC ist, dann Bestimmen, dass das Endgerät zu einem Endgerät gehört, das einen anormalen Zugang erfährt.

2. Verfahren nach Anspruch 1, wobei das Verfahren zur Identifizierung eines anormalen Endgerätes (S101) ferner umfasst: Abfragen einer Nummer und eines Modells des Endgerätes gemäß der IMSI-Nummer des anormalen Endgerätes, und Informieren eines Benutzers über eine dem Modell entsprechende Lösung.

3. Verfahren nach Anspruch 2, wobei das Verfahren nach dem Informieren eines Benutzers über eine dem Modell entsprechende Lösung umfasst: Überwachen, ob die IMSI-Nummern-Signalisierung zur Normalität zurückkehrt.

4. Verfahren nach Anspruch 2 oder 3, wobei die dem Modell entsprechende Lösung das Aktualisieren der Endgeräteversion umfasst.

5. Verfahren nach Anspruch 1, wobei das Bestimmen einer Zelle mit einem anormalen Indikator (S101) umfasst: im Vergleich zu dem Indikator der Zelle vor dem Aktivieren von eMTC, als Reaktion auf ein Änderungsverhältnis des Indikators der Zelle, das einen voreingestellten Schwellenwert überschreitet, dann Bestimmen, dass die Zelle eine Zelle mit einem anormalen Indikator ist; wobei der Indikator der Zelle die Anzahl der Übergaben der Zelle oder die Anzahl der Wiederherstellungen der Zelle umfasst.

6. Verfahren nach Anspruch 1, wobei das Identifizieren einer IMSI-Nummer eines Endgerätes, das einen anormalen Zugang erfährt, gemäß Signalisierungen der Zelle mit einem anormalen Indikator (S102) umfasst: Herausfiltern einer Signalisierung mit wiederholter Wiederherstellung unter den Signalisierungen der Zelle, Identifizieren einer ID eines Endgerätes aus der Signalisierung, dessen Anzahl von Wiederherstellungen innerhalb einer zweiten voreingestellten Zeitspanne einen voreingestellten Schwellenwert überschreitet, und Erfassen der IMSI-Nummer des Endgerätes gemäß der Endgeräte-ID und der Zugangssignalisierung.

7. Elektronisches Gerät zur Identifizierung eines anormalen Endgerätes, umfassend:
ein Beurteilungsmodul (11), das dazu konfiguriert ist, eine Zelle mit einem anormalen Indikator zu bestimmen;
ein Identifizierungsmodul (12), das dazu konfiguriert ist, eine internationale Mobilteilnehmer-Identifikationsnummer (IMSI-Nummer) eines Endgerätes, das einen anormalen Zugang erfährt, gemäß Signalisierungen der Zelle mit einem anormalen Indikator zu identifizieren; und
ein Bestimmungsmodul (13),
**dadurch gekennzeichnet, dass** das Bestimmungsmodul (13) dazu konfiguriert ist, die IMSI-Nummern-Signalisierung innerhalb einer voreingestellten Zeitspanne gemäß der IMSI-Nummer des Endgerätes zu überwachen; als Reaktion darauf, dass eine Zielzelle, an die das Endgerät übergeben wird, eine Long-Term-Evolution-Zelle (LTE-Zelle) ist, die Enhancement Machine Type Communication (eMTC) aktiviert,
und das Endgerät nach der Übergabe die Verbindung zurück zu einer Quellzelle wiederherstellt und die Quellzelle eine LTE-Zelle ohne Aktivierung von eMTC ist, dann zu bestimmen, dass das Endgerät zu einem Endgerät gehört, das einen anormalen Zugang erfährt.

8. Speichermedium, das ein Computerprogramm speichert, das dazu konfiguriert ist, das Verfahren nach einem der Ansprüche 1 bis 6 durchzuführen, wenn es von einem Prozessor eines elektronischen Gerätes ausgeführt wird.

9. Elektronisches Gerät, umfassend einen Speicher (302) und einen Prozessor (301), wobei der Speicher (302) ein Computerprogramm speichert, das, wenn es von dem Prozessor (301) ausgeführt wird, den Prozessor (301) dazu veranlasst, das Verfahren nach einem der Ansprüche 1 bis 6 durchzuführen.

## Revendications

1. Procédé exécuté par un dispositif électronique pour identifier un terminal anormal, comprenant : la détermination d'une cellule ayant un indicateur anormal (S101) ; l'identification d'un numéro international d'identification d'abonné mobile (en Anglais: international mobile subscriber identification), IMSI, d'un terminal éprouvant un accès anormal selon des signaux de la cellule ayant un indicateur anormal (S102) ; et la détermination du terminal éprouvant un accès anormal par vérification de signalisation de numéro IMSI (S103),
**caractérisé en ce que**, la détermination du terminal éprouvant un accès anormal par le biais d'une vérification de signalisation de numéro IMSI (S103) comprend : la surveillance de la signalisation de numéro IMSI dans une première période de temps prédéfinie en fonction du numéro IMSI du terminal ; en réponse à une cellule cible à laquelle le terminal est transféré étant une cellule d'évolution à long terme (en Anglais: Long Term Evolution), LTE, permettant une communication de type machine d'amélioration (en Anglais: Enhancement Machine Type Communication), eMTC,
et le terminal rétablissant la connexion à une cellule source après le transfert et la cellule source étant une cellule LTE sans activer eMTC, puis la détermination que le terminal appartient à un terminal éprouvant un accès anormal.

2. Procédé selon la revendication 1, dans lequel le procédé d'identification d'un terminal anormal (S101) comprend en outre : l'interrogation d'un numéro et d'un modèle du terminal selon le numéro IMSI du terminal anormal, et l'information d'un utilisateur d'une solution correspondant au modèle.

3. Procédé selon la revendication 2, dans lequel après avoir informé un utilisateur d'une solution correspondant au modèle, le procédé comprend : la surveillance du retour à la normalité de la signalisation du numéro IMSI.

4. Procédé selon la revendication 2 ou 3, dans lequel la solution correspondant au modèle comprend la mise à jour de la version du terminal.

5. Procédé selon la revendication 1, dans lequel la détermination d'une cellule ayant un indicateur anormal (S101) comprend : par rapport à l'indicateur de la cellule avant d'activer eMTC, en réponse à un rapport de changement de l'indicateur de la cellule dépassant un seuil prédéfini, puis la détermination que la cellule est une cellule ayant un indicateur anormal ; dans lequel l'indicateur de la cellule comprend le nombre de transferts de la cellule ou le nombre de rétablissements de la cellule.

6. Procédé selon la revendication 1, dans lequel l'identification d'un numéro IMSI d'un terminal éprouvant un accès anormal selon des signalisations de la cellule ayant un indicateur anormal (S102) comprend : le filtrage d'une signalisation avec un rétablissement récurrent parmi les signalisations de la cellule, l'identification à partir de la signalisation d'un ID d'un terminal dont le nombre de rétablissements dans une deuxième période de temps prédéfinie dépasse un seuil prédéfini, et l'acquisition du numéro IMSI du terminal selon l'ID de terminal et la signalisation d'accès.

7. Dispositif électronique pour identifier un terminal anormal, comprenant :
un module de jugement (11), configuré pour déterminer une cellule ayant un indicateur anormal ;
un module d'identification (12), configuré pour identifier un numéro international d'identification d'abonné mobile, IMSI, d'un terminal éprouvant un accès anormal selon des signaux de la cellule ayant un indicateur anormal ; et
un module de détermination (13),
**caractérisé en ce que**, le module de détermination (13) est configuré pour surveiller la signalisation du numéro IMSI dans une période de temps prédéfinie en fonction du numéro IMSI du terminal ; en réponse à une cellule cible à laquelle le terminal est transféré étant une cellule d'évolution à long terme, LTE, permettant une communication de type machine d'amélioration, eMTC,
et le terminal rétablissant la connexion à une cellule source après le transfert et la cellule source étant une cellule LTE sans activer eMTC, puis déterminer que le terminal appartient à un terminal éprouvant un accès anormal.

8. Support de stockage, stockant un programme informatique qui est configuré pour mettre en oeuvre le procédé de l'une quelconque des revendications 1 à 6 lorsqu'il est exécuté par un processeur d'un dispositif électronique.

9. Dispositif électronique, comprenant une mémoire (302) et un processeur (301), dans lequel la mémoire (302) stocke un programme informatique qui, lorsqu'il est exécuté par le processeur (301), amène le processeur (301) à mettre en oeuvre le procédé selon l'une quelconque des revendications 1 à 6.
